# EUROPEAN PATENT SPECIFICATION

(11) **EP 2 281 430 B1**
(45) Date of publication and mention of the grant of the patent: **21.03.2012**
(21) Application number: 09251942.0
(22) Date of filing: 05.08.2009
(51) Int. Cl.: A01D 34/84, A01D 34/90

(54) **Vegetation cutting tool with trimming and edging positions**
Mähwerkzeug mit Arbeitsstellungen zum Trimmen und Kantenschneiden
Outil de coupe de végétation avec des positions pour tondre et pour couper une bordure

(43) Date of publication of application: 09.02.2011
(73) Proprietor: Techtronic Outdoor Products Technology Limited, Hamilton HM12 (BM)
(72) Inventor: Walther, Moritz, London CW6 5AD (GB); Wang, Yu Long, Hou Jie Town, Dongguan City (CN); Wang, Hoi Pang, Kowloon, Hong Kong (CN)
(74) Representative: Every, David Aidan

(56) References cited:
- EP-A2- 1 403 008
- WO-A1-96/25843
- US-A- 3 330 102
- US-A- 4 463 544

## Description

### Technical field

The present invention relates to a vegetation cutting tool having a rotary cutter mounted to a handle, the cutter pivoting relative to the handle between positions for performing trimming and edging.

### Background of the Invention

US-A-3 330 102 discloses a vegetation cutting tool according to the preamble of claim 1.

Line trimmers are well-known vegetation cutting tools which employ a rotary cutter, particularly a flexible line, to cut grass or weeds. A head, mounted at the end of a handle shaft, typically contains a motor and a rotor to which the cutter is attached. In some tools of this type, by rotating the head relative to the handle shaft, the user can adjust the orientation of the cutter between trimming and edging orientations, but maintain the orientation of the handle held by the user. In the trimming orientation the cutter rotates about a substantially vertical axis to cut a horizontal swath. In the edging orientation a vertical swath is cut by rotation about a substantially horizontal axis to produce a more precise edge, for instance, for defining the edge of a lawn adjacent a pavement.

For holding the head in the trimming and edging orientations a spring-biased locking mechanism is provided. While the prior art locking mechanisms performed satisfactorily, it will be understood that here is an ongoing need for improved mechanisms addressing the ergonomic and manufacturing drawbacks with the old designs.

It is an object of the present invention to overcome or substantially ameliorate the above drawbacks or more generally to provide an improved vegetation cutting tool.

### Disclosure of the Invention

According to one aspect of the present invention there is provided a vegetation cutting tool comprising a cutter;
a motor that drives the cutter;
a head that supports the motor and the cutter;
a shaft;
a pivot extending between the head and the shaft, the pivot defining a pivot axis;
and a coupling mechanism that couples the head to the pivot for rotation of the head about the pivot axis, the coupling mechanism comprising:
a latch;
first and second recesses in the head for receipt of the latch at first and second rotational positions of the head respectively, the first and second rotational positions being appropriate for trimming and edging operations respectively;
a bias member that biases the latch into engagement with the first recess upon rotation of the head into the first rotational position, and biases the latch into engagement with the second recess upon rotation of the head into the second rotation position, characterised by
resilient means connected between the head and the shaft for applying torque to rotate the head relative to the shaft, away from the first position toward the second position.

Preferably the head includes a penannular concavity elongated to extend circumferentially about the pivot axis and disposed adjacent a convex surface of the pivot, wherein the resilient means is received in the concavity, with opposing ends of the resilient means abutting the end faces of the concavity.

Preferably the resilient means comprises a helical spring, although it will be understood that a resilient means such as an elastiomeric block, or the like, could be used.

Preferably the head turns relative to the shaft through an intermediate position between the first and second positions, and wherein between the intermediate position and the second position the resilient means applies no torque to rotate the head relative to the shaft.

Preferably the coupling mechanism further comprises a pedal operatively connected to the latch, for moving the latch against the bias member out of engagement with the first and second recesses. Preferably the pedal pivots transversely to the pivot axis.

Preferably the head is supported for rotation on a face complementary to an outer surface of the pivot.

Preferably the pivot is hollow, and the latch and bias member are received within the hollow pivot

Preferably at least one circumferential rib protrudes from the outer surface of the pivot, the rib received within an annular channel in the head, wherein a pair of coupler shells cooperate to form a coupler with apertures at first and second opposing ends for receiving the shaft and pivot respectively.

Preferably the shaft axis and pivot axis lie in a first plane, and the centre of gravity of the head is offset from the pivot axis such that with the first plane upright and the head in the edging position gravity produces a torque on the head tending to rotate the centre of gravity into the first plane.

Preferably the pedal, head and shaft each comprise respective moulded shells abutting one another substantially at the first plane

Preferably the coupling mechanism further includes a lever received within the pilot, the lever having an axle portion integral with an arm, the axle portion being rotationally fast with the pedal, the arm being engaged with the bias member and operatively connected to move the latch.

This invention provides a device which is effective and efficient in operational use, and which has a simple design which minimizes manufacturing costs. In particular it provides for ergonomically efficient operation for movement between the trimming and edging positions.

### Brief Description of the Drawings

Preferred forms of the present invention will now be described by way of example with reference to the accompanying drawings, wherein:
Figures 1 and 2 are perspective views of a tool according to the invention, with its head in trimming and edging orientations respectively:
Figure 3 is an exploded view of the head of the tool of Figs 1 and 2;
Figure 4a is a perspective view of a partially assembled head of the tool of Figs 1 and 2;
Figure 4b is a plan view of the partially assembled head of Fig. 4a, and
Figures 5 and 6 are sections along line AA of Fig. 4b showing the partially assembled head in trimming and edging orientations respectively.

### Description of the Preferred Embodiments

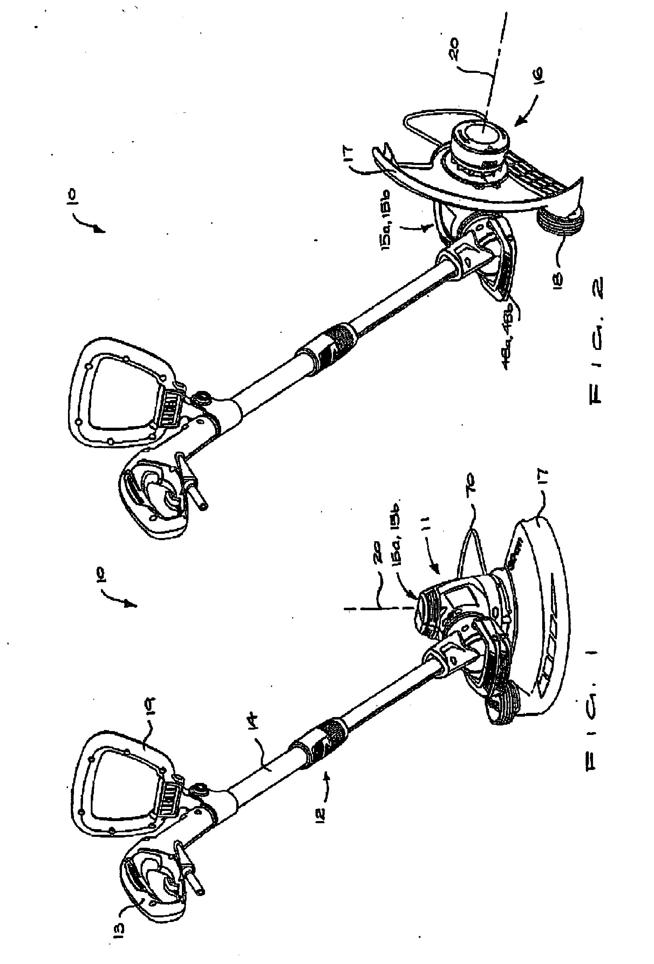

Referring to Figs 1 to 3, there is shown an embodiment of a tool in accordance with the present invention in the form of a line trimmer 10 that may be configured for lawn trimming (Fig. 1), and for lawn-edging (Fig. 2). The line trimmer 10 Includes a working head 11 and a handle 12. The handle 12 comprises a fixed grip 13 fixed to one end of the handle shaft 14 and an adjustable pivotable grip 19 which can be adjusted for user-comfort. The head 11 includes a housing 15a, 15b for supporting an electric motor 21 rotating a line cutter rotor 16 of conventional type about the drive axis 20. The head 11 further includes a guard 17 extending partially around the cutter rotor 16. A supporting wheel 18 is mounted to the guard 17 such that in the lawn-edging configuration it bears some of the weight of the head and thus makes the tool easier to operate. A resilient wire tree-protector 70 has an arcuate closed end 71 projecting from the front of the head, extending generally to the circumference of the cutting line (not shown), the opposing open mouth 72 section being received and clampingly secured about the housing 15a, 15b.

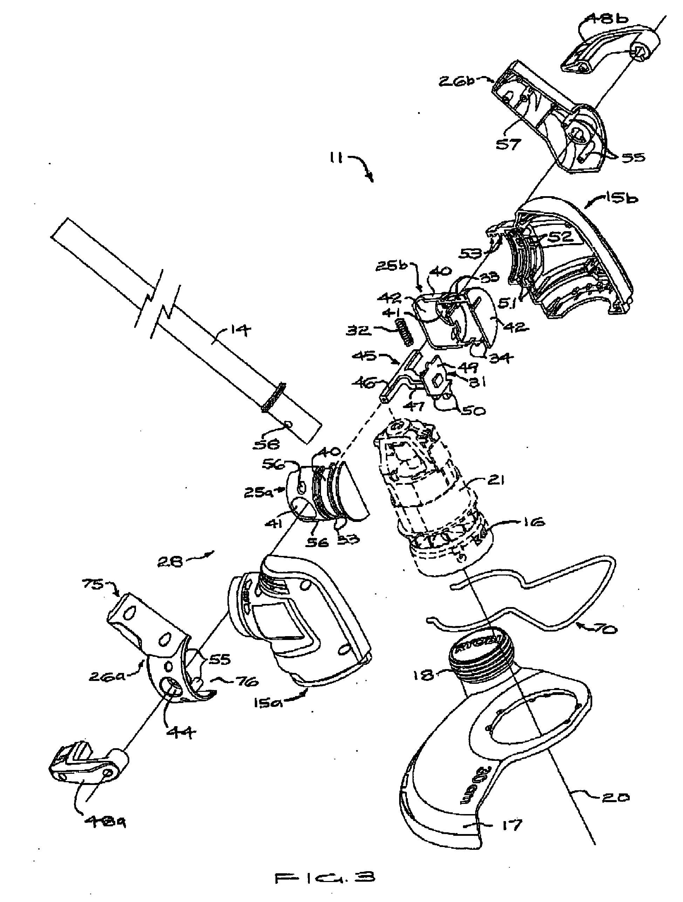

As seen in Fig. 3, the head 11 includes left- and right-handed housing shells 15a, 15b which are joined together by fasteners, general at a central plane (not shown - in which the drive axis 20 and pivot axis 29 lie), to form the motor housing 15a, 15b. In a like manner, a pivot 25a, 25b is formed from pivot shells 25a, 25b and is fixed to the end of the handle shaft 1a by a coupler formed of coupler shells 26a, 26b.

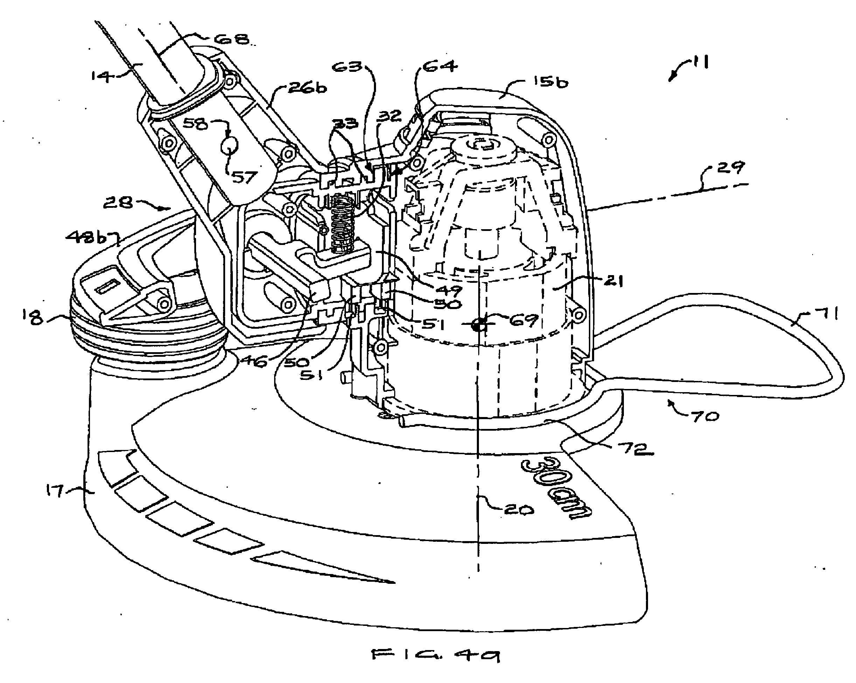

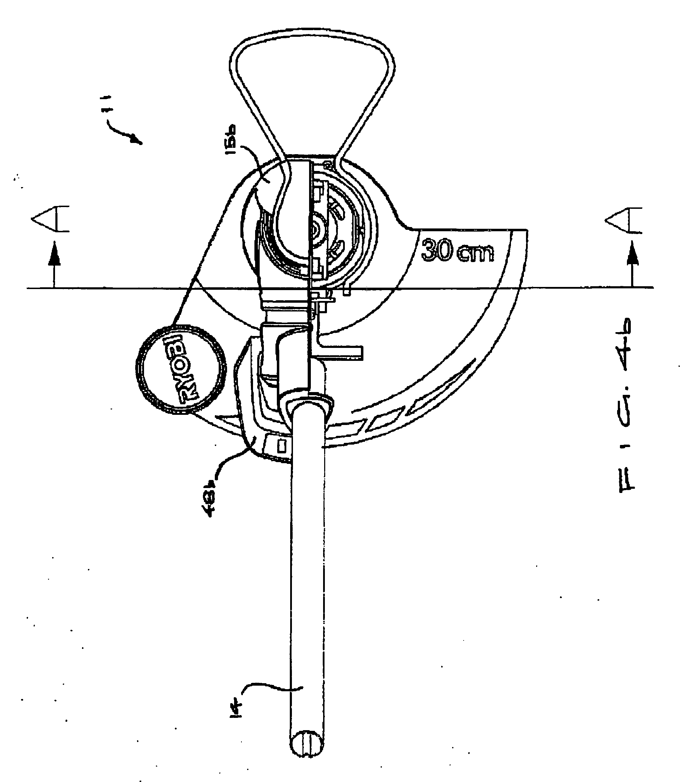

To better show the construction. Fig. 4 illustrates the head 11 partially assembled (i.e. without the housing shall 16a, pivot shell 25a, coupler shell 26a and pedal section 48a in place) to expose the motor 21. A coupling mechanism 28 couples the head 11 to the pivot 25a, 25b for rotation of the head about a pivot axis 29, which lies in the central plane of the drive axis 20 and shaft axis 68. The pivot axis 29 is perpendicular to the drive axis 20 and inclined at approximately 120° to the shaft axis. The coupling mechanism 28 further includes a latch 31 which holds the head in the trimming and edging positions 90° apart. The latch 31 cooperates with first and second pairs of recesses 51, 52 in the head, and with a bias member in the form of a spring 32 that biases the latch 31 into engagement with the recesses 51, 52.

The pivot 26a, 25b is a hollow member, having a generally cylindrical, elongate outer surface 40 and closed axially opposing ends 42. Two circumferential ribs 33 project from its outer surface 40. A transverse opening 41 extends through the outer surface 40. The coupler 26a, 26b has apertures 75, 76 at first and second opposing ends for receiving the shaft 14 and pivot 26a, 25b respectively, with a transverse opening 44 aligned with the opening 41. Protruding from the concave side of each of the coupler shells 26a, 26b are integral, parallel pin portions 55 complementary to holes 56 in the pivots 25a, 25b. Likewise pin portions 67 are complementary to the hole 58 in the shaft 14. With fasteners connecting the pin portions 55, 57 the coupler 26a, 26b and fixes the pivot 25a, 25b to the handle.

The housing shells 15a, 15b include a pivot-receiving portion with annular channels 53, each receiving one of the ribs 33, so as to secure the head axially. Provided in the housing shells 16a, 15b are the first pair of adjacent recesses 51 (spanning between the shells 16a, 15b) and the second pair of adjacent recesses 52 (in the shell 16b) and spaced from the first pair by 90 deg.

A lever 45 is received within the pivot 25a, 25b, and includes an axle portion 46 integral with an arm 47 orthogonal thereto. The axle portion 46 extends transversely through the openings 41. 44 in which it is supported to rotate, the opposing ends of the axle portion 46 being fixed to rotate with a pedal 48a, 48b. The pedal 48a, 48b projects from the rear of the head and is formed of left and right-handed parts 48a, 48b, each connected to opposite ends of the axle portion 46 and to one another. Opposing ends of the spring 32 abut the upper side arm 47 and the inner side of the pivot 25a. 25b, urging the lever 45 and pedal 48a, 48b to rotate.

The latch 31 includes a planar section 49 having a centrally positioned aperture therein, in which the arm 47 is received in a running fit Opposite edges of the planar section 49 are received in parallel channels (not shown) formed in the inner side of the pivot 25a, 25b, restraining the latch 31 to slide therein. Integral with the planar section 49 are a pair of parallel tabs 60, each received in a respective opening 34 in the pivot 25a, 25b, the tabs 50 being adapted to protrude from the openings 34 into the first pair of recesses 51 to lock the head in the trimming orientation, and into the second pair of recesses 52 to lock the head in the edging orientation.

The longitudinal axis of the handle shaft 14 and the pivot axis 29 lie in a first plane, which is vertical in the drawings. In the trimming position the drive axis 20 also lies in the first plane, and the centre of gravity of the head 69 lies generally on axis 20 below the pivot axis 29. However, in the edging position the drive axis is generally horizontal, such that the offset of the centre of gravity 69 in the position results in a torque tending to rotate the handle and turn the head toward the trimming position.

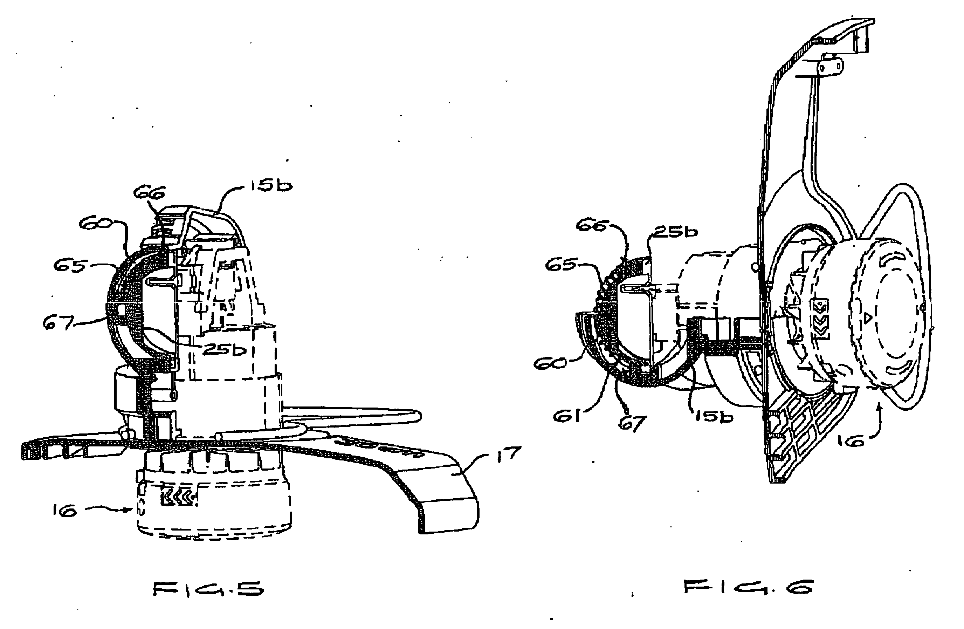

Referring to Figs 5 and 6, which show sections along line AA of Fig. 4b of the partially assembled head in trimming and edging orientations respectively, the housing includes a penamular concavity 60 elongated to extend circumferentially about the pivot axis 29 and disposed adjacent a cylindrical surface 61 of the pivot 25a, 25b. This concavity 60 is bounded by the housing shells 15a and 15b on its radially outer side and by the pivot shell 25b on its radially inner side. Parallel, arcuate faces 63 and 64 lie generally in respective transverse planes and bound axially opposing sides of the concavity 60. A helical compression spring 65 is received in the concavity in a free running fit so that it is generally free to extend and retract longitudinally, its axis curved complementary to the curvature of the concavity. In the trimming position of Fig. 5 the spring 65 is fully compressed between the faces 66 and 67 (Fig. 4a) of the head and shaft respectively, applying a torque to rotate the head 11 relative to the shaft 14, away from the trimming orientation toward the edging position. In the edging position of Fig. 6 the spring is uncompressed, and the length of the concavity 60 is longer than the uncompressed length of the spring 65.

When rotating the head from the trimming position to the edging position the user pushes the pedal 48a, 48b to release the latch 31, whereupon the spring 65 rotates the head to an intermediate position in which, for instance, the head may be supported upon the ground to complete the rotation, the latch engaging and locking automatically with the head in the edging position. When rotating the head in the opposite direction, in the edging position the weight of the offset centre of gravity provides the restoring torque when the head is raised from the ground, while the spring 65 provides a "soft stop" as head is rotated by gravity toward the trimming position.

Aspects of the present invention have been described by way of example only and it should be appreciated that medications and additions may be made thereto without departing from the scope of the invention as defined by the following claims.

## Claims

1. A vegetation cutting tool (10) comprising a cutter (16);
a motor (21) that drives the cutter;
a head (11) that supports the motor and the cutter;
a shaft (14);
a pivot (25a, 25b) extending between the head (11) and the shaft (14), the pivot defining a pivot axis (29);
and a coupling mechanism (28) that couples the head (11) to the pivot (25a, 25b) for rotation of the head about the pivot axis, the coupling mechanism comprising:
a latch (31);
first and second recesses (51, 52) in the head for receipt of the latch (31) at first and second rotational position of the head respectively, the first and
second rotational positions being appropriate for trimming and edging operations respectively;
a bias member (32) that biases the latch (31) into engagement with the first recess (51) upon rotation of the head into the first rotational position, and biases the latch (31) into engagement with the second recess (52) upon rotation of the head into the second rotational position, **characterised by**
resilient means (65) connected between the head (11) and the shaft (14) for applying torque to rotate the head (11) relative to the shaft (14), away from the first position toward the second position.

2. The vegetation cutting tool (10) of claim 1 wherein the head includes a penannular concavity (60) elongated to extend circumferentially about the pivot axis (29) and disposed adjacent a convex surface (61) of the pivot, wherein the resilient means is received in the concavity.

3. The vegetation cutting tool (10) of claim 1 or claim 2 wherein the resilient means comprises a helical spring (65).

4. The vegetation cutting tool (10) of any one of the preceding claims wherein the head (11) turns relative to the shaft (14) through an intermediate position between the first and second positions, and wherein between the intermediate position and the second position the resilient means applies no torque to rotate the head (11) relative to the shaft (14).

5. The vegetation cutting tool (10) of any one of the preceding claims wherein the coupling mechanism (28) further comprises a pedal (48a, 48b) operatively connected to the latch (31), for moving the latch against the bias member (32) out of engagement with the first and second recesses (51, 52).

6. The vegetation cutting tool (10) of any one of the preceding claims wherein the pedal (48a, 48b) pivots transversely to the pivot axis (29).

7. The vegetation cutting tool (10) of any one of the preceding claims wherein the head (11) is supported for rotation on a face complementary to an outer surface (40) of the pivot (26a, 25b).

8. The vegetation cutting tool (10) of any one of the preceding claims wherein the pivot (25a, 25b) is hollow, and the latch (31) and bias member (32) are received within the hollow pivot (25a, 25b).

9. The vegetation cutting tool (10) of any one of the preceding claims wherein at least one circumferential rib (33) protrudes from the outer surface (40) of the pivot, the rib (33) received within an annular channel (53) in the head, wherein a pair of coupler shells (26a, 26b) cooperate to form a coupler with apertures (75, 76) at first and second opposing ends for receiving the shaft (14) and pivot (25a, 25b) respectively.

10. The vegetation cutting tool (10) of any one of the preceding claims wherein a shaft axis (68) and pivot axis (29) lie in a first plane, and a centre of gravity of the head (69) is offset from the pivot axis such that with the first plane upright and the head in the edging position gravity produces a torque on the head (11) tending to rotate the centre of gravity (69) into the first plane.

11. The vegetation cutting tool (10) of claim 10 wherein the pedal (48a, 48b), head (11) and shaft (14) each comprise respective moulded shells abutting one another substantially at the first plane

12. The vegetation cutting tool (10) of any one of the preceding claims wherein the coupling mechanism (28) further includes a lever (46) received within the pivot (25a, 25b), the lever having an axle portion (46) integral with an arm (47), the axle portion (46) being rotationally fast with the pedal (48a, 48b), the arm (47) being engaged with the bias member (32) and operatively connected to move the latch (31).

## Patentansprüche

1. Vegetationsschneidewerkzeug (10), umfassend eine Schneidevorrichtung (16),
einen Motor (21), der die Schneidevorrichtung antreibt,
einen Kopf (11), der den Motor und die Schneidevorrichtung trägt,
einen Schaft (14),
ein Drehgelenk (25a, 25b), das sich zwischen dem Kopf (11) und dem Schaft (14) erstreckt, wobei das Drehgelenk eine Drehachse (29) definiert,
und einen Kopplungsmechanismus (28), der den Kopf (11) an das Drehgelenk (25a, 25b) koppelt, für eine Drehung des Kopfes um die Drehachse, wobei der Kopplungsmechanismus Folgendes umfasst:
eine Klinke (31),
eine erste und eine zweite Aussparung (51, 52) in dem Kopf für eine Aufnahme der Klinke (31) jeweils an einer ersten bzw. zweiten Drehstellung des Kopfes, wobei die erste und die zweite Drehstellung jeweils für Trimm- bzw. Kantenschneidevorgänge geeignet sind,
ein Vorspannelement (32), das auf eine Drehung des Kopfes in die erste Drehstellung hin die Klinke (31) in einen Eingriff mit der ersten Aussparung (51) und auf eine Drehung des Kopfes in die zweite Drehstellung hin die Klinke (31) in einen Eingriff mit der zweiten Aussparung (52) vorspannt, **gekennzeichnet durch**:
ein elastisches Mittel (65), das zwischen dem Kopf (11) und dem Schaft (14) verbunden ist, um ein Drehmoment, um den Kopf (11) im Verhältnis zu dem Schaft (14), von der ersten Stellung weg zu der zweiten Stellung hin, zu drehen, auszuüben.

2. Vegetationsschneidewerkzeug (10) nach Anspruch 1, wobei der Kopf eine teilringförmige Rundhöhlung (60) umfasst, die verlängert, so dass sie sich umlaufend um die Drehachse (29) erstreckt, und angrenzend an eine konvexe Fläche (61) des Drehgelenks angeordnet ist, wobei die elastischen Mittel in der Rundhöhlung aufgenommen werden.

3. Vegetationsschneidewerkzeug (10) nach Anspruch 1 oder Anspruch 2, wobei die elastischen Mittel eine Schraubenfeder (65) umfassen.

4. Vegetationsschneidewerkzeug (10) nach einem der vorhergehenden Ansprüche, wobei sich der Kopf (11) im Verhältnis zu dem Schaft (14) durch eine Zwischenstellung zwischen der ersten und der zweiten Stellung dreht und wobei zwischen der Zwischenstellung und der zweiten Stellung die elastischen Mittel kein Drehmoment, um den Kopf (11) im Verhältnis zu dem Schaft (14) zu drehen, ausüben.

5. Vegetationsschneidewerkzeug (10) nach einem der vorhergehenden Ansprüche, wobei der Kopplungsmechanismus (28) ferner ein Pedal (48a, 48b) umfasst, das wirksam mit der Klinke (31) verbunden ist, um die Klinke gegen das Vorspannelement (32) aus dem Eingriff mit der ersten und der zweiten Aussparung (51, 52) zu bewegen.

6. Vegetationsschneidewerkzeug (10) nach einem der vorhergehenden Ansprüche, wobei das Pedal (48a, 48b) quer zu der Drehachse (29) schwenkt.

7. Vegetationsschneidewerkzeug (10) nach einem der vorhergehenden Ansprüche, wobei der Kopf (11) für eine Drehung auf einer Fläche getragen wird, die zu einer Außenfläche (40) des Drehgelenkes (25a, 25b) komplementär ist.

8. Vegetationsschneidewerkzeug (10) nach einem der vorhergehenden Ansprüche, wobei das Drehgelenk (25a, 25b) hohl ist und die Klinke (31) und das Vorspannelement (32) innerhalb des hohlen Drehgelenkes (25a, 25b) aufgenommen werden.

9. Vegetationsschneidewerkzeug (10) nach einem der vorhergehenden Ansprüche, wobei wenigstens eine umlaufende Rippe (33) von der Außenfläche (40) des Drehgelenkes aus vorspringt, wobei die Rippe (33) innerhalb eines ringförmigen Kanals (53) in dem Kopf aufgenommen wird, wobei ein Paar von Kopplerschalen (28a, 28b) zusammenwirken, um einen Koppler mit Öffnungen (75, 76) an einem ersten und einem entgegengesetzten zweiten Ende zu bilden, um jeweils den Schaft (14) bzw. das Drehgelenk (25a, 25b) aufzunehmen.

10. Vegetationsschneidewerkzeug (10) nach einem der vorhergehenden Ansprüche, wobei eine Schaftachse (68) und die Drehachse (29) in einer ersten Ebene liegen und ein Schwerpunkt (69) des Kopfes aus der Drehachse versetzt ist derart, dass die Schwerkraft, wenn die erste Ebene aufrecht und der Kopf in der Kantenschneidestellung ist, ein Drehmoment auf den Kopf (11), das dazu neigt, den Schwerpunkt (69) in die erste Ebene zu drehen, erzeugt.

11. Vegetationsschneidewerkzeug (10) nach Anspruch 10, wobei das Pedal (48a, 48b), der Knopf (11) und der Schaft (14) jeweils jeweilige geformte Schalen umfassen, die im Wesentlichen in der ersten Ebene aneinander anstoßen.

12. Vegetationsschneidewerkzeug (10) nach einem der vorhergehenden Ansprüche, wobei der Kopplungsmechanismus (28) ferner einen Hebel (45) einschließt, der innerhalb des Drehgelenkes (25a, 25b) aufgenommen wird, wobei der Hebel einen Achsenabschnitt (46) hat, der integral mit einem Arm (47) ist, wobei der Achsenabschnitt (46) drehfest mit dem Pedal (48a, 48b) ist, wobei der Arm (47) mit dem Vorspannelement (32) in Eingriff gebracht und wirksam verbunden ist, um die Klinke (31) zu bewegen.

## Revendications

1. Outil de coupe de végétation (10), comprenant un moyen de coupe (16) ;
un moteur (21), entraînant le moyen de coupe ;
une tête (11), supportant le moteur et le moyen de coupe ;
un arbre (14) ;
un pivot (25a, 25b), s'étendant entre la tête (11) et l'arbre (14), le pivot définissant un axe de pivotement (29) ;
et un mécanisme d'accouplement (28), accouplant la tête (11) au pivot (25a, 25b) pour permettre une rotation de la tête sur l'axe de pivotement, le mécanisme d'accouplement comprenant :
un verrou (31) ;
des premier et deuxième évidements (51, 52) dans la tête, pour recevoir le verrou (31) au niveau de première et deuxième positions de rotation respectives de la tête, les première et deuxième positions de rotation étant respectivement appropriées pour des opérations de tonte et de coupe des bordures ;
un élément poussoir (32), poussant le verrou (31) en vue de son engagement dans le premier évidement (51) lors de la rotation de la tête dans la première position de rotation, et poussant le verrou (31) en vue de son engagement dans le deuxième évidement (52) lors de la rotation de la tête dans la deuxième position de rotation, **caractérisé par**
un moyen élastique (85) connecté entre la tête (11) et l'arbre (14), pour appliquer un couple afin de faire tourner la tête (11) par rapport à l'arbre (14), à l'écart de la première position et vers la deuxième position.

2. Outil de coupe de végétation (10) selon la revendication 1, dans lequel la tête engobe une concavité pratiquement annulaire (60), allongée en vue de s'étendre autour de la circonférence de l'axe de pivotement (29) et agencée près d'une surface convexe (61) du pivot, le moyen élastique étant reçu dans la concavité.

3. Outil de coupe de végétation (10) selon les revendications 1 ou 2, dans lequel le moyen élastique comprend un ressort hélicoïdal (65).

4. Outil de coupe de végétation (10) selon l'une quelconque des revendications précédentes, dans lequel la tête (11) tourne par rapport à l'arbre (14) à travers une position intermédiaire entre les première et deuxième positions, le moyen élastique n'appliquant pas de couple pour faire tourner la tête (11) par rapport à l'arbre entre la position intermédiaire et la deuxième position.

5. Outil de coupe de végétation (10) selon l'une quelconque des revendications précédentes, dans lequel le mécanisme d'accouplement (28) comprend en outre une pédale (48a, 48b), connectée en service au verrou (31), pour déplacer le verrou contre la poussée du moyen poussoir (32) et le dégager des premier et deuxième évidements (51, 52).

6. Outil de coupe de végétation (10) selon l'une quelconque des revendications précédentes, dans lequel la pédale (48a, 48b) pivote transversalement par rapport à l'axe de pivotement (29).

7. Outil de coupe de végétation (10) selon l'une quelconque des revendications précédentes, dans lequel la tête (11) est supportée en vue de sa rotation sur une face complémentaire d'une surface externe (40) du pivot (25a, 25b).

8. Outil de coupe (10) selon l'une quelconque des revendications précédentes, dans lequel le pivot (25a, 25b) est creux, le verrou (31) et l'élément poussoir (32) étant reçus dans le pivot creux (25a, 25b).

9. Outil de coupe de végétation (10) selon l'une quelconque des revendications précédentes, dans lequel au moins une nervure circonférentielle (33) déborde de la surface externe (40) du pivot, la nervure (33) étant reçue dans un canal annulaire (53) dans la tête, et dans lequel une paire de coques à accouplement (28a, 28b) coopèrent pour former un moyen d'accouplement, comportant des ouvertures (75, 76) au niveau de première et deuxième extrémités opposées pour recevoir respectivement l'arbre (14) et le pivot (25a, 25b).

10. Outil de coupe de végétation (10) selon l'une quelconque des revendications précédentes, dans lequel un axe de l'arbre (68) et l'axe de pivotement (29) se situent dans un premier plan, un centre de gravité de la tête (69) étant décalé par rapport à l'axe de pivotement, de sorte que lorsque le premier plan est vertical, la tête se trouvant dans la position de coupe des bordures, la gravité produit un couple à la tête (11), tendant à faire tourner le centre de gravité (69) dans le premier plan.

11. Outil de coupe de végétation (10) selon la revendication 10, dans lequel la pédale (48a, 48b), la tête (11) et l'arbre (14) comprennent chacun des coques moulées respectives butant l'une contre l'autre pratiquement au niveau du premier plan.

12. Outil de coupe de végétation (10) selon l'une quelconque des revendications précédentes, dans lequel le mécanisme d'accouplement (28) englobe en outre un levier (45) reçu dans le pivot (25a, 25b), le levier comportant une partie d'essieu (46) formée d'une seule pièce avec un bras (47), la partie d'essieu (46) étant fixée de manière rotative sur la pédale (48a, 48b), le bras (47) étant engagé dans l'élément poussoir (32) et étant connecté en service de sorte à déplacer le verrou (31).
